# EUROPEAN PATENT APPLICATION

(11) **EP 4 618 260 A1**
(43) Date of publication of application: **17.09.2025**
(21) Application number: 23959878.2
(22) Date of filing: 30.11.2023
(51) Int. Cl.: H01M 50/102, H01M 50/133

(54) **BATTERY CELL, BATTERY, ELECTRICAL DEVICE, AND ENERGY STORAGE APPARATUS**

(71) Applicant: Contemporary Amperex Technology Co., Limited, Ningde, Fujian 352100 (CN)
(72) Inventor: CAO, Mengkai, Ningde, Fujian 352100 (CN); LIN, Denghua, Ningde, Fujian 352100 (CN); CAI, Xianghu, Ningde, Fujian 352100 (CN); CHEN, Xinxiang, Ningde, Fujian 352100 (CN); JIANG, Xiangwei, Ningde, Fujian 352100 (CN); ZHENG, Yulian, Ningde, Fujian 352100 (CN); WANG, Peng, Ningde, Fujian 352100 (CN)
(74) Representative: Rowlands, Stuart Michael
(86) International application number: PCT/CN2023/135607
(87) International publication number: WO 2025/111964

(57) **Abstract**

Embodiments of this application provide a battery cell, a battery, an electric device, and an energy storage apparatus. The battery cell includes a housing. The housing includes a first wall and a second wall, where the first wall and the second wall are welded to form a first welding zone, the first wall includes a first zone and a second zone arranged along a first direction, the first zone is arranged adjacent to the first welding zone, a thickness of the first zone is greater than a thickness of the second zone, and the first direction is parallel to a thickness direction of the second wall. The technical solutions of the embodiments of this application can improve the reliability of the battery.

## Description

### TECHNICAL FIELD

This application relates to the field of battery technologies, and in particular, to a battery cell, a battery, an electric device, and an energy storage apparatus.

### BACKGROUND

Energy saving and emission reduction are crucial to the sustainable development of the automobile industry. Electric vehicles, with their advantages in energy conservation and emission reduction, have become an important part of sustainable development of the automobile industry. For electric vehicles, battery technology is an important factor in connection with their development.

In the process of battery manufacturing, the reliability of the battery is an issue that cannot be ignored. Therefore, how reliability of batteries is improved is an urgent technical problem that needs to be solved in battery technology.

### SUMMARY

This application provides a battery cell, a battery, an electric device, and an energy storage apparatus, which can improve the reliability of the battery.

This application is implemented using the following technical solutions.

According to a first aspect, an embodiment of this application provides a battery cell. The battery cell includes a housing. The housing includes a first wall and a second wall, where the first wall and the second wall are welded to form a first welding zone, the first wall includes a first zone and a second zone arranged along a first direction, the first zone is arranged adjacent to the first welding zone, a thickness of the first zone is greater than a thickness of the second zone, and the first direction is parallel to a thickness direction of the second wall.

According to the battery cell of this embodiment of this application, the first wall and the second wall are welded to form the first welding zone, and the first zone adjacent to the first welding zone is thickened, such that the thickness of the first zone is greater than the thickness of the second zone, thereby reducing the risk of fatigue cracking of the first zone and improving the reliability of the battery cell.

According to some embodiments of this application, along the first direction, a size of the first zone is H, satisfying 0<H≤5 mm.

In the foregoing solution, the size of the first zone in the first direction satisfies the foregoing range, and the first zone has a certain coverage in the first direction, which can reduce the risk of cracking in a zone of the first wall close to the first welding zone.

According to some embodiments of this application, the thickness of the first zone is t, and the thickness of the second zone is a, satisfying a<t≤4a.

In the foregoing solution, the thickness of the first zone and the thickness of the second zone satisfy the foregoing relationship, and the first zone has higher strength and occupies a relatively small assembly space, allowing the battery cell to have high energy density.

According to some embodiments of this application, a+0.1 mm≤t≤3a.

In the foregoing solution, compared with a<t≤4a, when a+0.1 mm≤t≤3a, in the case that the first zone occupies a relatively small assembly space, the first zone has higher strength.

According to some embodiments of this application, one of the following conditions is satisfied: along the thickness direction of the first wall, the second zone has a first surface facing the inside of the battery cell, and part of the first zone protrudes from the first surface; along the thickness direction of the first wall, the second zone has a second surface facing away from the inside of the battery cell, and part of the first zone protrudes from the second surface; and along the thickness direction of the first wall, the second zone has a first surface facing the inside of the battery cell and a second surface facing away from the inside of the battery cell, part of the first zone protrudes from the first surface, and part of the first zone protrudes from the second surface.

In the foregoing solution, when part of the first zone protrudes from the first surface, the first zone protrudes toward the inside of the battery cell relative to the second zone, reducing the space occupied by the first zone on the side of the first wall facing away from the inside of the battery cell in a case that the first zone has relatively high strength. When part of the first zone protrudes from the second surface, the first zone protrudes in a direction away from the inside of the battery cell relative to the second zone, thereby reducing the space occupied by the first zone on the side of the first wall facing the inside of the battery cell in a case that the first zone has relatively high strength. When part of the first zone protrudes from the first surface and part of the first zone protrudes from the second surface, the first zone has relatively high strength, and occupies small space on the side of the first wall facing the inside of the battery cell and the side of the first wall facing away from the inside of the battery cell, respectively.

According to some embodiments of this application, the first zone includes a thickened section and a transition section arranged along the first direction, where the thickened section is connected to the second zone through the transition section, a thickness of the thickened section is greater than a thickness of the second zone, and the thickness of the transition section gradually decreases from the thickened section to the second zone.

In the foregoing solution, the thickness of the transition section gradually decreases from the thickened section to the second zone, which facilitates processing and manufacturing.

According to some embodiments of this application, the first wall further includes a third zone, where the third zone, the first zone, and the second zone are sequentially distributed along the first direction, the second wall and the third zone are connected to form the first welding zone, and a maximum thickness of the third zone is less than a maximum thickness of the first zone.

In the foregoing solution, the third zone, the first zone, and the second zone are sequentially distributed along the first direction, the third zone is connected to the second wall, and the maximum thickness of the first zone is greater than the maximum thickness of the third zone, allowing the first zone to have higher strength so as to reduce the risk of fatigue cracking of the first wall, and allowing the battery cell to have high reliability.

According to some embodiments of this application, the housing includes a shell and an end cover, where the shell has an opening, the end cover closes the opening, one of the first wall and the second wall is the end cover, and the other is at least one wall of the shell.

In the foregoing solution, when the first wall is the end cover and the second wall is at least one wall of the shell, a thickness of the end cover can be relatively thin to meet the requirement for thinner wall thickness of the housing, allowing the battery cell to have relatively high gravimetric energy density. When the first wall is at least one wall of the shell and the second wall is the end cover, a thickness of the shell is thinner than the thickness of the end cover, and the first zone of the first wall is thickened, which can reduce the risk of fatigue cracking of the first wall.

According to some embodiments of this application, the shell includes two first side walls arranged opposite each other in a second direction and two second side walls arranged opposite each other in a third direction, where the second direction, the third direction, and the first direction are perpendicular to each other, the two first side walls and the two second side walls enclose a cavity with an opening, and the end cover closes the opening; and the second wall is the end cover, and the first wall is the first side wall.

In the foregoing solution, the second wall is the end cover, the first wall is the first side wall, the first side wall is connected to the end cover, and the first side wall is provided with a thickened zone, which can reduce the risk of fatigue cracking of the first side wall and allow the battery cell to have relatively high reliability.

According to some embodiments of this application, the second side walls and the end cover are welded to form a second welding zone, and the second side wall includes a third zone and a fourth zone arranged along the first direction, where the third zone is adjacent to the second welding zone, and a maximum thickness of the third zone is greater than a maximum thickness of the fourth zone.

In the foregoing solution, the second zone of the second side wall adjacent to the second welding zone is thickened, which can reduce the risk of fatigue cracking of the second side wall.

According to some embodiments of this application, the shell further includes a bottom wall, where the two first side walls and the two second side walls are arranged around the bottom wall, the two first side walls and the two second side walls are all connected to the bottom wall, the two first side walls and the two second side walls are integrally formed with the bottom wall, and the end cover is arranged opposite the bottom wall.

In the foregoing solution, the shell is integrally formed, facilitating processing and manufacturing.

According to some embodiments of this application, the shell further includes a bottom wall, where the two first side walls and the two second side walls are arranged around the bottom wall, the two first side walls and the two second side walls are all connected to the bottom wall, the end cover is arranged opposite the bottom wall, and an area of an outer surface of the first side wall is greater than an area of an outer surface of the second side wall and greater than an area of an outer surface of the bottom wall.

In the foregoing solution, the first side wall may be a larger surface of the battery cell The larger surface is subjected to a large force during the charge and discharge cycling of the battery cell. The opening of the first side wall is thickened, which can reduce the risk of fatigue cracking of the larger surface and improve the reliability of the battery cell.

According to some embodiments of this application, the opening is provided on each of two ends of the shell, and the end cover is provided in a quantity of two, each end cover closing the corresponding opening.

In the foregoing solution, the opening is provided on each of two ends of the shell, and the two openings are thickened so as to reduce the risk of fatigue cracking of the shell.

According to some embodiments of this application, a maximum thickness of the first wall is less than a maximum thickness of the second wall.

In the foregoing solution, the maximum thickness of the first wall is less than the maximum thickness of the second wall, and the first zone of the first wall is thickened, which can reduce the risk of fatigue cracking of the first wall.

According to a second aspect, an embodiment of this application provides a battery, where the battery includes the battery cell according to any one of the foregoing embodiments.

According to some embodiments of this application, the housing includes a shell and an end cover, where the shell has an opening, the end cover closes the opening, the second wall is the end cover, the first wall is a wall of the shell, the battery cell is provided in plurality, the plurality of battery cells are stacked along a second direction, the second direction is perpendicular to the first direction; and the battery further includes an end plate, where along the second direction, the end plate is provided at an end of the plurality of battery cells, and along a direction in which the second zone points toward the first zone, at least part of the first zone extends beyond the end plate.

In the foregoing solution, the end plate is arranged at the end of the plurality of battery cells in the second direction, and the end plate has a relatively large connection area with the shell of the adjacent battery cell, so as to provide constraints on the shell and reduce the risk of fatigue cracking of the shell.

According to some embodiments of this application, the end plate is arranged facing the first wall.

In the foregoing solution, the end plate is arranged facing the first wall, and the end plate has a relatively large contact area with the second zone, such that the end plate can constrain the first wall during the charge and discharge cycling of the battery cell, so as to reduce the risk of fatigue cracking of the first wall.

According to a third aspect, an embodiment of this application provides an electric device, where the electric device includes the battery cell or the battery according to any one of the foregoing embodiments.

According to a fourth aspect, an embodiment of this application provides an energy storage apparatus, where the energy storage apparatus includes the battery cell or the battery according to any one of the foregoing embodiments.

For additional aspects and advantages of this application, some will be given in the following description, and some will become apparent in the following description or will be understood in the practice of this application.

### BRIEF DESCRIPTION OF DRAWINGS

To describe the technical solutions of the embodiments of this application more clearly, the following briefly describes the accompanying drawings required for describing the embodiments. It will be apparent that the accompanying drawings below show merely some embodiments of this application and thus should not be considered as limitations on the scope. Persons of ordinary skill in the art may still derive other related drawings from the accompanying drawings without creative efforts.
FIG. 1 is a schematic structural diagram of a vehicle according to some embodiments of this application;
FIG. 2 is an exploded view of a battery according to some embodiments of this application;
FIG. 3 is an exploded view of a battery cell according to some embodiments of this application;
FIG. 4 is a schematic diagram of a connection state of a first wall and a second wall according to some embodiments of this application;
FIG. 5 is a schematic diagram of a first zone protruding from a first surface according to some embodiments of this application;
FIG. 6 is a schematic diagram of a first zone protruding from a second surface according to some embodiments of this application;
FIG. 7 is a schematic diagram of a first zone protruding from a first surface and a second surface according to some embodiments of this application;
FIG. 8 is a schematic structural diagram of a housing according to some embodiments of this application;
FIG. 9 is a schematic diagram of a connection state of a second side wall and an end cover according to some embodiments of this application;
FIG. 10 is a schematic assembly diagram of an end plate and a plurality of battery cells according to some embodiments of this application;
FIG. 11 is a schematic assembly diagram of an end plate and a battery cell according to an embodiment of this application; and
FIG. 12 is an enlarged view of position A of FIG. 11.

The accompanying drawings are not drawn to scale.

Reference signs are described as follows: 100: battery; 10: box; 11: the first sub-box; 12: second sub-box; 20: battery cell; 21: housing; 211: shell; 211a: first side wall; 211b: second side wall; 211c: bottom wall; 212: end cover; 213: first wall; 2131: first zone; 2131a: thickened section; 2131b: transition section; 2132: second zone; 2132a: first surface; 2132b: second surface; 2133: fifth zone; 214: second wall; 215: first welding zone; 216: second welding zone; 217: third zone; 218: fourth zone; 21a: electrode terminal; 22: electrode assembly; 23: adapter; 30: end plate; 200: controller; 300: motor; 1000: vehicle; F: dividing line; P: thickness direction of first wall; X: first direction; Y: second direction; and Z: third direction.

### DESCRIPTION OF EMBODIMENTS

To make the objectives, technical solutions, and advantages of the embodiments of this application clearer, the following clearly and completely describes the technical solutions in the embodiments of this application with reference to the accompanying drawings in the embodiments of this application. It will be apparent that the described embodiments are some but not all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the description of this application, it should be noted that unless otherwise specified and defined explicitly, the terms "mounting", "connecting", "joining", and "attachment" should be understood in their general senses. For example, they may refer to a fixed connection, a detachable connection, or an integral connection, and may refer to a direct connection, an indirect connection via an intermediate medium, or an internal communication between two elements. A person of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

In this application, "a plurality of" means more than two (inclusive). Similarly, "a plurality of groups" means more than two (inclusive) groups, and "a plurality of pieces" means more than two (inclusive) pieces.

In some embodiments, the battery can be a battery module, and when there are a plurality of battery cells, the plurality of battery cells are arranged and fastened to form a battery module.

In some embodiments, the battery may be a battery pack, the battery pack includes a box and battery cells, and the battery cells or battery modules are accommodated in the box.

In some embodiments, the box may be used as part of the chassis structure of a vehicle. For example, part of the box may become at least part of the chassis of a vehicle, or part of the box may become at least parts of a cross beam and longitudinal beam of a vehicle.

In some embodiments, the battery may be an energy storage apparatus. The energy storage apparatus include an energy storage container, an energy storage electric cabinet, and the like.

In the embodiments of this application, the battery cell may be a secondary battery, and the secondary battery refers to a battery cell that can be recharged to activate active materials for continuous use after the battery cell is discharged.

The battery cell may be, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, and a lead storage battery.

The battery cell typically includes an electrode assembly. The electrode assembly includes a positive electrode, a negative electrode, and a separator. During charging and discharging of the battery cell, active ions (such as lithium ions) intercalate and deintercalate back and forth between the positive electrode and the negative electrode. The separator is arranged between the positive electrode and the negative electrode to prevent short circuit of the positive electrode and negative electrode and to allow the active ions to pass through.

In some embodiments, the positive electrode may be a positive electrode plate, and the positive electrode plate may include a positive electrode current collector and a positive electrode active material arranged on at least one surface of the positive electrode current collector.

In an example, the positive electrode current collector includes two back-to-back surfaces in a thickness direction of the positive electrode current collector, and the positive electrode active material is arranged on either or both of the two back-to-back surfaces of the positive electrode current collector.

In an example, the positive electrode current collector may be a metal foil current collector or a composite current collector. For example, as the metal foil, the positive electrode current collector may use aluminum with a silver-plated surface, stainless steel with a silver-plated surface, stainless steel, copper, aluminum, nickel, baked carbon, carbon, nickel, or titanium. The composite current collector may include a polymer material matrix and a metal layer. The composite current collector may be formed by forming a metal material (aluminum, aluminum alloy, nickel, nickel alloy, titanium, titanium alloy, silver, silver alloy, or the like) on a polymer material matrix (for example, a matrix of polypropylene, polyethylene terephthalate, polybutylene terephthalate, polystyrene, or polyethylene).

In an example, the positive electrode active material may include at least one of the following materials: lithium-containing phosphate, lithium transition metal oxide, and respective modified compounds thereof. However, this application is not limited to such materials, and may alternatively use other conventional well-known materials that can be used as positive electrode active materials for batteries.

In some embodiments, the negative electrode may be a negative electrode plate, and the negative electrode plate may include a negative electrode current collector.

In an example, the negative electrode current collector may be a metal foil current collector or a composite current collector. For example, as the metal foil, the negative electrode current collector may use aluminum with a silver-plated surface, stainless steel with a silver-plated surface, stainless steel, copper, aluminum, nickel, baked carbon, carbon, nickel, or titanium.

In some embodiments, the negative electrode current collector includes two back-to-back surfaces in its thickness direction, and the negative electrode active material is disposed on either or both of the two back-to-back surfaces of the negative electrode current collector.

In an example, the negative electrode active material may be a negative electrode active material for batteries well-known in the art. In an example, the negative electrode active material may include at least one of the following materials: artificial graphite, natural graphite, soft carbon, hard carbon, a silicon-based material, a tin-based material, lithium titanate, or the like. The silicon-based material may be selected from at least one of elemental silicon, silicon-oxygen compound, silicon-carbon composite, silicon-nitrogen composite, or silicon alloy. The tin-based material may be selected from at least one of elemental tin, tin-oxygen compound, or tin alloy. However, this application is not limited to these materials, but may use other conventional materials that can be used as negative electrode active materials for batteries instead. One of these negative electrode active materials may be used alone, or two or more of them may be used in combination.

In some embodiments, the separator is an isolating film. The isolating film is not limited to any particular type in this application, and may be any well-known porous isolating film with good chemical stability and mechanical stability.

For example, major materials of the isolating film may be selected from at least one of glass fiber, non-woven fabric, polyethylene, polypropylene, or polyvinylidene fluoride. The isolating film may be a single-layer film or a multi-layer composite film, which is not particularly limited. When the isolating film is a multi-layer composite film, all layers may be made of same or different materials, which is not particularly limited. The separator may be an independent component located between the positive electrode and the negative electrode, or may be attached to surfaces of the positive electrode and the negative electrode.

In some embodiments, the separator is a solid electrolyte. The solid electrolyte is arranged between the positive electrode and the negative electrode, and plays the roles of transporting ions and isolating the positive electrode and the negative electrode.

In some embodiments, the electrode assembly is a wound structure. The positive electrode plate and the negative electrode plate are wound into a wound structure.

In some embodiments, the electrode assembly is a laminated structure.

In some embodiments, the battery cell may include a housing. The housing is configured to encapsulate the electrode assembly, the electrolyte, and other components. The housing may be steel housing, aluminum housing, plastic housing (for example, polypropylene), composite metal housing (for example, copper-aluminum composite housing), aluminum-plastic film, or the like.

In some embodiments, the housing includes an end cover and a shell, where the shell is provided with an opening, and the end cover closes the opening to form a closed space for accommodating the electrode assembly and substances such as the electrolyte. The shell may be provided with one or more openings. One or more end covers may be provided.

In some embodiments, at least one electrode terminal is provided on the housing, and the electrode terminal is electrically connected to a tab of the electrode assembly. The electrode terminal may be directly connected to the tab or indirectly connected to the tab through an adapter. The electrode terminal may be provided on the end cover or may be provided on the shell.

In some embodiments, an explosion-proof valve is provided on the housing. The explosion-proof valve is configured to release the pressure inside the battery cell.

In an example, the battery cell may be a cylindrical battery cell, a prismatic battery cell, a pouch battery cell, or a battery cell of another shape. The prismatic battery cell includes a square shell battery cell, a blade battery cell, and a polygonal battery cell, such as a hexagonal battery cell.

For the development of battery technologies, many design factors need to be considered, for example, performance parameters such as energy density, discharge capacity, and charge and discharge rate, as well as reliability of the battery.

In some embodiments, the battery cell includes a housing, where the housing includes a shell and an end cover, the shell has an opening, and the end cover closes the opening. To realize the connection between the end cover and the shell, the end cover is typically welded with the shell. However, after the end cover and the shell are welded to form a welding mark, zones of the end cover and the shell that are adjacent to the welding mark form a heat-affected zone due to the high temperature of the welding, and the strength of the parts in the heat-affected zone is reduced. During the charge and discharge cycling of the battery cell, the components inside the battery cell participate in the electrochemical reaction, which causes the housing to expand and contract, leading to the fatigue cracking of the heat-affected zone, leakage of the electrolyte, and even the risk of fire and explosion. This in turn results in low reliability of the battery cell.

In view of this, this embodiment of this application provides a technical solution. The battery cell includes a housing. The housing includes a first wall and a second wall. The first wall and the second wall are welded to form a first welding zone. The first welding zone is a welding mark. The first wall includes a first zone and a second zone arranged along a first direction, where the first direction is parallel to a thickness direction of the second wall. The first zone is adjacent to the first welding zone, and a thickness of the first zone is greater than a thickness of the second zone, such that the battery cell has relatively high reliability.

In such a battery cell, at least part of the first zone may be a heat-affected zone, and the thickness of the first zone is greater than the thickness of the second zone. Therefore, thickening the first zone can enhance the strength of the first zone to reduce the risk of fatigue cracking of the first zone, thereby improving the reliability of the battery cell.

The battery disclosed in the embodiments of this application may be used without limitation in electric devices such as vehicles, ships, or aircrafts. The battery disclosed in this application may be used to constitute a power supply system of that electric device.

An embodiment of this application provides an electric device that uses a battery as a power source. The electric device may be, but is not limited to, a mobile phone, a tablet computer, a laptop computer, an electric toy, an electric tool, an electric bicycle, an electric motorcycle, an electric car, a ship, or a spacecraft. The electric toy may be a fixed or mobile electric toy, for example, a game console, an electric toy car, an electric toy ship, and an electric toy airplane. The spacecraft may include an airplane, a rocket, a space shuttle, a spaceship, and the like.

For ease of description, the electric device of an embodiment of this application being a vehicle 1000 is used as an example for description of the following embodiments.

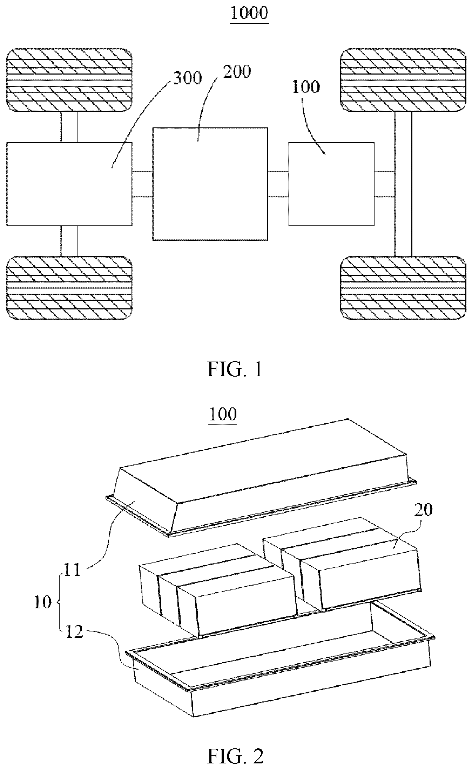

Referring to FIG. 1, FIG. 1 is a schematic structural diagram of a vehicle according to some embodiments of this application. The vehicle 1000 may be a fossil fuel vehicle, a natural-gas vehicle, or a new energy vehicle. The new energy vehicle may be a battery electric vehicle, a hybrid electric vehicle, a range-extended electric vehicle, or the like. The vehicle 1000 is provided with a battery 100 inside, and the battery 100 may be disposed at the bottom, front, or rear of the vehicle 1000. The battery 100 may be configured to supply power to the vehicle 1000. For example, the battery 100 may be used as an operational power source for the vehicle 1000 for use in a circuit system of the vehicle 1000, for example, to satisfy power needs of start, navigation, and running of the vehicle 1000.

The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first sub-box 11 and a second sub-box 12. The first sub-box 11 and the second sub-box 12 fit together to jointly define an accommodating space for accommodating the battery cell 20. The second sub-box 12 may be a hollow structure with an opening at one end, the first sub-box 11 may be a plate structure, and the first sub-box 11 covers an opening side of the second sub-box 12, such that the first sub-box 11 and the second sub-box 12 jointly define an accommodating space. The first sub-box 11 and the second sub-box 12 may both be a hollow structure with an opening on one side, and the opening side of the first sub-box 11 covers the opening side of the second sub-box 12.

In the battery 100, the battery cells 20 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10; or certainly, the battery 100 may be formed by a plurality of battery cells 20 connected in series, parallel, or series-parallel first to form a battery module and then a plurality of battery modules being connected in series, parallel, or series-parallel to form an entirety which is accommodated in the box 10. The battery 100 may further include other structures. For example, the battery 100 may further include a busbar configured to implement electrical connection between the plurality of battery cells 20.

The battery cell 20 may be a secondary battery or a primary battery, or may be a lithium-sulfur battery, a sodium-ion battery, or a magnesium-ion battery, but is not limited thereto.

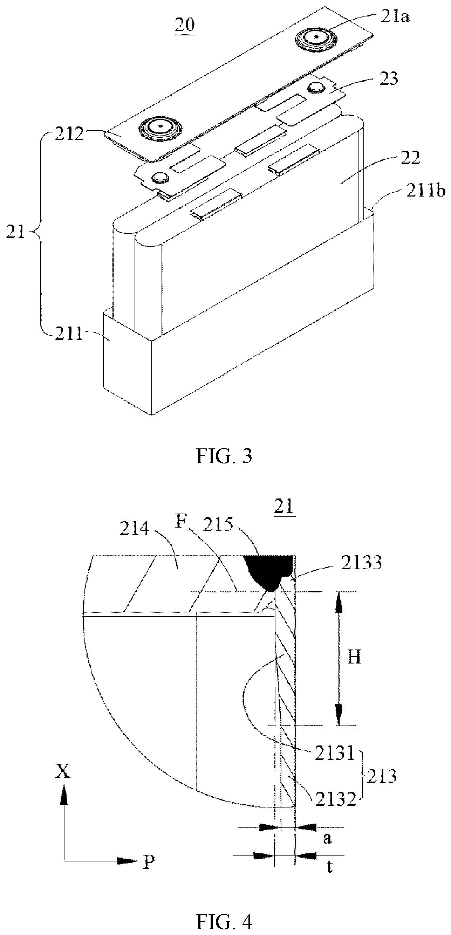

Referring to FIG. 3, FIG. 3 is an exploded view of a battery cell according to some embodiments of this application. As shown in FIG. 3, the battery cell 20 includes a housing 21, an electrode assembly 22 and other functional components. The housing 21 includes a shell 211 and an end cover 212, where the shell 211 has an opening, and the end cover 212 closes the opening to separate the internal environment of the battery cell 20 from the external environment.

The shell 211 is an assembly configured to cooperate with the end cover 212 to form an internal environment of the battery cell 20, where the formed internal environment can be used to accommodate the electrode assembly 22, an electrolyte, and other components. The shell 211 and the end cover 212 may be independent components. The shell 211 may be of various shapes and sizes. Specifically, a shape of the shell 211 may be determined according to a specific shape and size of the electrode assembly 22. The shell 211 can be made of various materials, such as copper, iron, aluminum, stainless steel, and aluminum alloy.

The end cover 212 refers to a component that covers the opening of the shell 211 to separate the internal environment of the battery cell 20 from the external environment. A shape of the end cover 212 is not limited and may be adapted to a shape of the shell 211 to fit the shell 211. Optionally, the end cover 212 may be made of a material (for example, aluminum alloy) with specified hardness and strength, such that the end cover 212 is less likely to deform under extrusion and collision, allowing the battery cell 20 to have a higher structural strength and improved reliability. Functional components such as an electrode terminal 21a may be provided on the end cover 212. The electrode terminal 21a may be configured to be electrically connected to the electrode assembly 22 for outputting or inputting electric energy of the battery cell 20. The end cover 212 may also be made of various materials, such as copper, iron, aluminum, stainless steel, and aluminum alloy, which are not particularly limited in the embodiments of this application. In some embodiments, an insulating structure may also be provided inside the end cover 212, and the insulating structure may be configured to isolate an electrical connection component in the shell 211 from the end cover 212 so as to reduce the risk of short circuit. Illustratively, the insulating structure may be plastic, rubber, or the like.

The electrode assembly 22 is a component in which electrochemical reactions take place in the battery cell 20. The shell 211 may include one or more electrode assemblies 22. The electrode assembly 22 is mainly formed by winding or stacking a positive electrode plate and a negative electrode plate, and an isolating film is typically arranged between the positive electrode plate and the negative electrode plate. The isolating film is configured to separate the positive electrode plate and the negative electrode plate, so as to avoid internal short circuit between the positive electrode plate and the negative electrode plate. Parts of the positive electrode plate and the negative electrode plate that contain active substances constitute a main body of the electrode assembly, while parts of the positive electrode plate and the negative electrode plate that contain no active substance each constitute a tab. A positive tab and a negative tab may both be located at one end of the main body or be located at two ends of the main body respectively.

Referring to FIG. 3, and further referring to FIG. 4, FIG. 4 is a schematic diagram of a connection state of a first wall and a second wall according to some embodiments of this application. An embodiment of this application provides a battery cell 20, where the battery cell 20 includes a housing 21. The housing 21 includes a first wall 213 and a second wall 214, where the first wall 213 and the second wall 214 are welded to form a first welding zone 215, the first wall 213 includes a first zone 2131 and a second zone 2132 arranged along a first direction X, the first zone 2131 is arranged adjacent to the first welding zone 215, a thickness of the first zone 2131 is greater than a thickness of the second zone 2132, and the first direction X is parallel to a thickness direction of the second wall 214.

In FIG. 4, the direction indicated by letter X may be the first direction. The first direction X is parallel to the thickness direction of the second wall 214. For example, when the first wall 213 is the end cover 212 and the second wall 214 is a wall of the shell 211 connected to the end cover 212, the first zone 2131 and the second zone 2132 are sequentially distributed in the thickness direction of the second wall 214. Alternatively, when the first wall 213 is a wall of the shell 211 connected to the end cover 212 and the second wall 214 is the end cover 212, the first zone 2131 and the second zone 2132 are sequentially distributed in the thickness direction of the end cover 212.

The first welding zone 215 is a zone formed after the first wall 213 and the second wall 214 are welded, and the first welding zone 215 may be a welding mark. After the first wall 213 and the second wall 214 are welded to form the first welding zone 215, zones of the first wall 213 and the second wall 214 that are adjacent to the first welding zone 215 form a heat-affected zone, and at least part of the first zone 2131 may be the heat-affected zone.

The first zone 2131 is located adjacent to the first welding zone 215, which means that the first zone 2131 and the first welding zone 215 are sequentially distributed along the first direction X. For example, the dotted line in FIG. 4 is the dividing line F between the first welding zone 215 and the first zone 2131, and an edge of an end of the first welding zone 215 in the first direction X is in contact with an edge of an end of the first zone 2131 far away from the second zone 2132 in the first direction X.

In some embodiments, the first wall 213 further includes a fifth zone 2133, where the fifth zone 2133, the first zone 2131, and the second zone 2132 are sequentially distributed along the first direction X, the second wall 214 and the fifth zone 2133 are connected to form the first welding zone 215, and a maximum thickness of the fifth zone 2133 is less than a maximum thickness of the first zone 2131.

In FIG. 4, the fifth zone 2133 and the first welding zone 215 are above the dividing line F, and the first zone 2131 is below the dividing line F. The fifth zone 2133, the first zone 2131, and the second zone 2132 are sequentially distributed along the first direction X, the fifth zone 2133 is connected to the second wall 214, and the maximum thickness of the first zone 2131 is greater than the maximum thickness of the fifth zone 2133, allowing the first zone 2131 to have higher strength so as to reduce the risk of fatigue cracking of the first wall 213, thereby allowing the battery cell 20 to have higher reliability.

The second zone 2132 may be arranged adjacent to the first zone 2131 in the first direction X, or the second zone 2132 may be apart from the first zone 2131 in the first direction X.

The thickness of the first zone 2131 is greater than the thickness of the second zone 2132, and the first zone 2131 is thickened relative to the second zone 2132 so as to enhance the strength of the first zone 2131.

According to the battery cell 20 of this embodiment of this application, the first wall 213 and the second wall 214 are welded to form the first welding zone 215, and the first zone 2131 adjacent to the first welding zone 215 is thickened, such that the thickness of the first zone 2131 is greater than the thickness of the second zone 2132, reducing the risk of fatigue cracking of the first zone 2131, and improving the reliability of the battery cell 20.

Refer to FIG. 4, according to some embodiments of this application, along the first direction X, a size of the first zone 2131 is H, satisfying 0<H≤5 mm.

H may be the size of the first zone 2131 in the first direction X. Optionally, H may be, but is not limited to, 0.1 mm, 0.3 mm, 0.5 mm, 0.7 mm, 0.9 mm, 1 mm, 1.5 mm, 2 mm, 2.5 mm, 3 mm, 3.5 mm, 4 mm, 4.5 mm, 5 mm, or the like.

Optionally, 1 mm≤H≤4 mm.

In the foregoing solution, the size of the first zone 2131 in the first direction X satisfies the foregoing range, and the first zone 2131 has a certain coverage in the first direction X, which can reduce the risk of cracking in a zone of the first wall 213 close to the first welding zone 215.

Referring to FIG. 4, according to some embodiments of this application, the thickness of the first zone 2131 is t, and the thickness of the second zone 2132 is a, satisfying a<t≤4a.

In the figure, the direction indicated by letter P may be the thickness direction of the first wall 213. The thickness direction of the first zone 2131 is parallel to the thickness direction P of the first wall, and the thickness direction of the second zone 2132 is parallel to the thickness direction P of the first wall.

Optionally, the thickness t of the first zone 2131 may be, but is not limited to, a, 1.2a, 1.4a, 1.6a, 1.8a, 2a, 2.2a, 2.4a, 2.6a, 2.8a, 3a, 3.2a, 3.4a, 3.6a, 3.8a, 4a, or the like.

In the foregoing solution, the thickness of the first zone 2131 and the thickness of the second zone 2132 satisfy the foregoing relationship, and the first zone 2131 has higher strength and occupies a relatively small assembly space, allowing the battery cell 20 to have high energy density.

According to some embodiments of this application, a+0.1 mm≤t≤3a.

In some embodiments, a>0.2 mm, for example, 0.4 mm≤a≤2 mm.

Optionally, a may be, but is not limited to, 0.4 mm, 0.5 mm, 0.6 mm, 1 mm, 1.5 mm, 2 mm, 2.5 mm, 3 mm, 3.5 mm, 4 mm, or the like. a may be any value between 0.4 mm and 2 mm.

Optionally, t may be, but is not limited to, a+0.1 mm, 2a, 2.1a, 2.2a, 2.3a, 2.4a, 2.5a, 2.6a, 2.7a, 2.8a, 2.9a, 3a, or the like.

In the foregoing solution, compared with a<t≤4a, when a+0.1 mm≤t≤3a, in the case that the first zone 2131 occupies a relatively small assembly space, the first zone 2131 has higher strength.

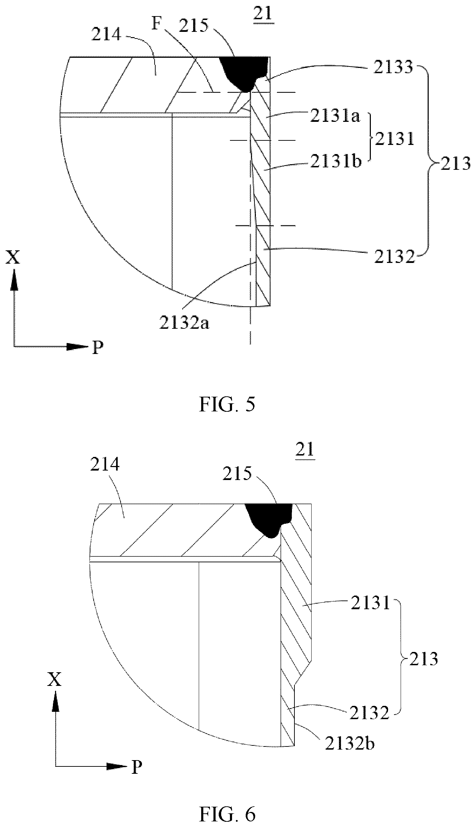

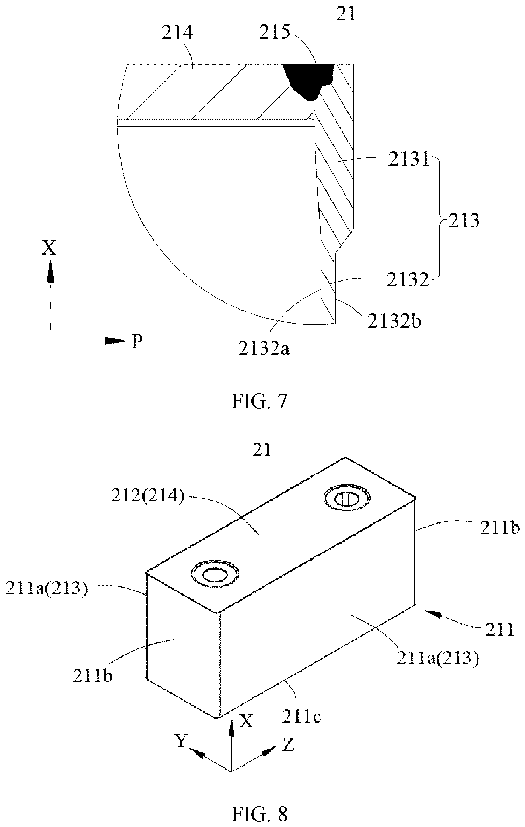

Referring to FIG. 5 to FIG. 7, FIG. 5 is a schematic diagram of a first zone protruding from a first surface according to some embodiments of this application, FIG. 6 is a schematic diagram of a first zone protruding from a second surface according to some embodiments of this application, and FIG. 7 is a schematic diagram of a first zone protruding from a first surface and a second surface according to some embodiments of this application. According to some embodiments of this application, one of the following conditions is satisfied: along the thickness direction P of the first wall, the second zone 2132 has a first surface 2132a facing the inside of the battery cell 20, and part of the first zone 2131 protrudes from the first surface 2132a; along the thickness direction P of the first wall, the second zone 2132 has a second surface 2132b facing away from the inside of the battery cell 20, and part of the first zone 2131 protrudes from the second surface 2132b; and along the thickness direction P of the first wall, the second zone 2132 has a first surface 2132a facing the inside of the battery cell 20 and a second surface 2132b facing away from the inside of the battery cell 20, part of the first zone 2131 protrudes from the first surface 2132a, and part of the first zone 2131 protrudes from the second surface 2132b.

The first surface 2132a and the second surface 2132b may be two surfaces of the second zone 2132 which are arranged opposite each other in the thickness direction P of the first wall.

When part of the first zone 2131 protrudes from the first surface 2132a, the first zone 2131 protrudes toward the inside of the battery cell 20 relative to the second zone 2132, reducing the space occupied by the first zone 2131 on the side of the first wall 213 facing away from the inside of the battery cell 20 in a case that the first zone 2131 has relatively high strength.

When part of the first zone 2131 protrudes from the second surface 2132b, the first zone 2131 protrudes in a direction away from the inside of the battery cell 20 relative to the second zone 2132, reducing the space occupied by the first zone 2131 on the side of the first wall 213 facing the inside of the battery cell 20 in a case that the first zone 2131 has relatively high strength.

When part of the first zone 2131 protrudes from the first surface 2132a and part of the first zone 2131 protrudes from the second surface 2132b, the first zone 2131 has relatively high strength, and occupies a relatively small space on the side of the first wall 213 facing the inside of the battery cell 20 and the side of the first wall 213 facing away from the inside of the battery cell 20, respectively.

Referring to FIG. 5, according to some embodiments of this application, the first zone 2131 includes a thickened section 2131a and a transition section 2131b arranged along the first direction X, where the thickened section 2131a is connected to the second zone 2132 through the transition section 2131b, a thickness of the thickened section 2131a is greater than a thickness of the second zone 2132, and the thickness of the transition section 2131b gradually decreases from the thickened section 2131a to the second zone 2132.

The thickened section 2131a and the transition section 2131b are arranged along the first direction X. The thickened section 2131a and the second zone 2132 are connected through the transition section 2131b, such that the thickened section 2131a, the transition section 2131b, and the second zone 2132 are sequentially distributed along the first direction X.

The thickened section 2131a may be an equal thickness section or a variable thickness section. For example, when the thickened section 2131a is an equal thickness section, thicknesses of zones in the thickened section 2131a are equal along the first direction X, so as to facilitate processing and manufacturing; and when the thickened section 2131a is a variable thickness section, thicknesses of different zones in the thickened section 2131a are different.

Optionally, the thickened section 2131a is an equal thickness section.

A thickness of the thickened section 2131a is greater than the thickness of the second zone 2132, and a thickness of any zone of the thickened section 2131a is greater than the thickness of the second zone 2132.

In the foregoing solution, the transition section 2131b is a transition zone between the thickened section 2131a and the second zone 2132, and a thickness of the transition section 2131b gradually decreases from the thickened section 2131a to the second zone 2132, so as to facilitate processing and manufacturing.

Referring to FIG. 3, and further referring to FIG. 8, FIG. 8 is a schematic structural diagram of a housing according to some embodiments of this application. According to some embodiments of this application, the housing 21 includes a shell 211 and an end cover 212, where the shell 211 has an opening, the end cover 212 closes the opening, one of the first wall 213 and the second wall 214 is the end cover 212, and the other is at least one wall of the shell 211.

The shell 211 is configured to hold the electrode assembly and the electrolyte. The end cover 212 closes the opening so as to be connected to the shell 211 to form a closed space.

The first wall 213 may be the end cover 212, and the second wall 214 may be at least one wall of the shell 211. Alternatively, the first wall 213 may be at least one wall of the shell 211, and the second wall 214 may be the end cover 212.

In the foregoing solution, when the first wall 213 is the end cover 212 and the second wall 214 is at least one wall of the shell 211, a thickness of the end cover 212 can be relatively thin to meet the requirement for thinner wall thickness of the housing 21, allowing the battery cell 20 to have relatively high gravimetric energy density. When the first wall 213 is at least one wall of the shell 211 and the second wall 214 is the end cover 212, a thickness of the shell 211 is thinner than the thickness of the end cover 212, and the first zone 2131 of the first wall 213 is thickened, which can reduce the risk of fatigue cracking of the first wall 213.

Referring to FIG. 8, according to some embodiments of this application, the shell 211 includes two first side walls 211a arranged opposite each other in a second direction Y and two second side walls 211b arranged opposite each other in a third direction Z, where the second direction Y, the third direction Z, and the first direction X are perpendicular to each other, the two first side walls 211a and the two second side walls 211b enclose a cavity with an opening, and the end cover 212 closes the opening; and the second wall 214 is the end cover 212, and the first wall 213 is the first side wall 211a.

The two first side walls 211a are arranged opposite each other along the second direction y, and the two first side walls 211a are arranged in parallel; the two second side walls 211b are arranged opposite each other along the third direction z, and the two second side walls 211b are arranged in parallel; two ends of each first side wall 211a are respectively connected to the two second side walls 211b, and the two first side walls 211a and the two second side walls 211b enclose a cavity with an opening, such that the shell 211 is in a rectangular parallelepiped shape.

In the foregoing solution, the second wall 214 is the end cover 212, the first wall 213 is the first side wall 211a, the first side wall 211a is connected to the end cover 212, and the first side wall 211a is provided with a thickened zone, which can reduce the risk of fatigue cracking of the first side wall 211a and allow the battery cell 20 to have relatively high reliability.

According to some embodiments of this application, an area of an outer surface of the first side wall 211a is greater than an area of an outer surface of the second side wall 211b.

The first side wall 211a may be a larger surface of the battery cell 20. During the charge and discharge cycling of the battery cell 20, the first side wall 211a is subjected to a large force. The first wall 213 is the first side wall 211a, and the first zone 2131 is thickened, which can enhance the strength of the first side wall 211a and reduce the risk of fatigue cracking of the first side wall 211a.

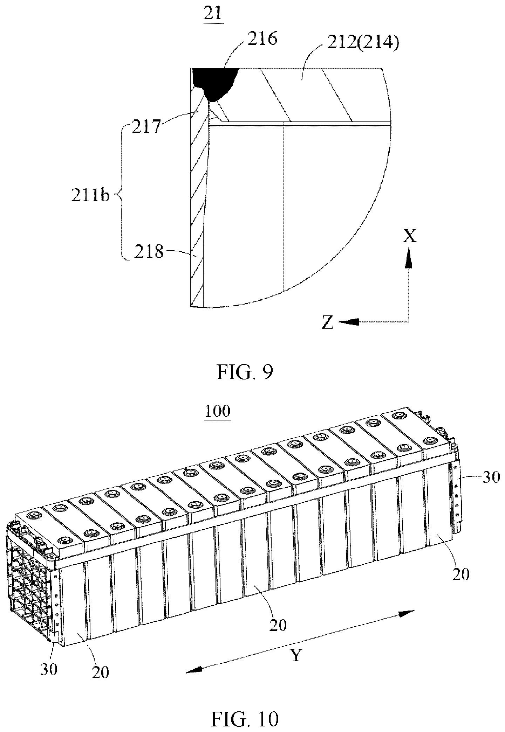

Referring to FIG. 9, FIG. 9 is a schematic diagram of a connection state of a second side wall and an end cover according to some embodiments of this application. According to some embodiments of this application, the second side walls 211b and the end cover 212 are welded to form a second welding zone 216, and the second side wall 211b includes a third zone 217 and a fourth zone 218 arranged along the first direction X, where the third zone 217 is adjacent to the second welding zone 216, and a maximum thickness of the third zone 217 is greater than a maximum thickness of the fourth zone 218.

A thickness direction of the second side wall 211b may be parallel to the third direction Z, and a thickness direction of the third zone 217 and a thickness direction of the fourth zone 218 are both parallel to the third direction Z.

The second welding zone 216 is a zone formed after the second side wall 211b and the end cover 212 are welded, and the second welding zone 216 may be a welding mark. After the second side wall 211b and the end cover 212 are welded to form the second welding zone 216, zones of the second side wall 211b and the end cover 212 that are adjacent to the second welding zone 216 form a heat-affected zone, and at least part of the third zone 217 may be the heat-affected zone.

The third zone 217 is located adjacent to the second welding zone 216, which means that the third zone 217 and the second welding zone 216 are sequentially distributed along the first direction X, and an edge of an end of the second welding zone 216 in the first direction X is in contact with an edge of an end of the third zone 217 far away from the fourth zone 218 in the first direction X.

The fourth zone 218 may be arranged adjacent to the third zone 217 in the first direction X, or the fourth zone 218 may be apart from the third zone 217 in the first direction X.

The thickness of the third zone 217 is greater than the thickness of the fourth zone 218, and the third zone 217 is thickened relative to the fourth zone 218 so as to enhance the strength of the third zone 217.

In the foregoing solution, the second zone 2132 of the second side wall 211b adjacent to the second welding zone 216 is thickened, which can reduce the risk of fatigue cracking of the second side wall 211b.

Referring to FIG. 8, according to some embodiments of this application, the shell 211 further includes a bottom wall 211c, where the two first side walls 211a and the two second side walls 211b are arranged around the bottom wall 211c, the two first side walls 211a and the two second side walls 211b are all connected to the bottom wall 211c, the two first side walls 211a and the two second side walls 211b are integrally formed with the bottom wall 211c, and the end cover 212 is arranged opposite the bottom wall 211c.

The bottom wall 211c and the end cover 212 are arranged opposite each other along the thickness direction of the end cover 212, and the thickness direction of the end cover 212, the second direction Y, and the third direction Z are perpendicular to each other.

The two first side walls 211a and two second side walls 211b are integrally formed with the bottom wall 211c, and the shell 211 may be punched from a plate, or the shell 211 may be roll-formed from a plate.

In the foregoing solution, the shell 211 is integrally formed, facilitating processing and manufacturing.

According to some embodiments of this application, the shell 211 further includes a bottom wall 211c, where the two first side walls 211a and the two second side walls 211b are arranged around the bottom wall 211c, the two first side walls 211a and the two second side walls 211b are all connected to the bottom wall 211c, the end cover 212 is arranged opposite the bottom wall 211c, and an area of an outer surface of the first side wall 211a is greater than an area of an outer surface of the second side wall 211b and greater than an area of an outer surface of the bottom wall 211c.

In the foregoing solution, the first side wall 211a may be a larger surface of the battery cell 20, the larger surface is subjected to a large force during the charge and discharge cycling of the battery cell 20, and the opening of the first side wall 211a is thickened, which can reduce the risk of fatigue cracking of the larger surface and improve the reliability of the battery cell 20.

According to some embodiments of this application, the opening is provided on each of two ends of the shell 211, and the end cover 212 is provided in a quantity of two, each end cover 212 closing the corresponding opening.

In the foregoing solution, the opening is provided on each of two ends of the shell 211, and the two openings are thickened so as to reduce the risk of fatigue cracking of the shell 211.

According to some embodiments of this application, a maximum thickness of the first wall 213 is less than a maximum thickness of the second wall 214.

The first side wall 211a is the first wall 213, the end cover 212 is the second wall 214, and the maximum thickness of the first side wall 211a is less than the maximum thickness of the end cover 212, such that the end cover 212 has relatively high strength.

In the foregoing solution, the maximum thickness of the first wall 213 is less than the maximum thickness of the second wall 214, and the first zone 2131 of the first wall 213 is thickened, which can reduce the risk of fatigue cracking of the first wall 213.

According to some embodiments of this application, an embodiment of this application provides a battery 100, where the battery 100 includes the battery cell 20 according to any one of the foregoing embodiments.

Referring to FIG. 10, FIG. 10 is a schematic assembly diagram of an end plate and a plurality of battery cells according to some embodiments of this application. According to some embodiments of this application, the housing 21 includes a shell 211 and an end cover 212, where the shell 211 has an opening, the end cover 212 closes the opening. The second wall 214 is the end cover 212, and the first wall 213 is a wall of the shell 211. The battery cell 20 is provided in plurality, and the plurality of battery cells 20 are stacked along a second direction Y, where the second direction Y is perpendicular to the first direction X. The battery 100 further includes an end plate 30, where the end plate 30 is arranged at an end of the plurality of battery cells 20 along the second direction Y, and at least part of the first zone 2131 exceeds beyond the end plate 30 along a direction that the second zone 2132 points to the first zone 2131.

The plurality of battery cells 20 are stacked along the second direction Y. In the second direction Y, the end plate 30 is arranged at the end of the plurality of battery cells 20, and the end plate 30 is connected to the battery cell 20 located at the end of the plurality of battery cells 20 in the second direction Y. The end plate 30 can limit the battery cells 20 at the end, constraining the deformation of the battery cells 20.

In the foregoing solution, the end plate 30 is arranged at the end of the plurality of battery cells 20 in the second direction Y, and the end plate 30 has a relatively large connection area with the shell 211 of the adjacent battery cell 20, so as to constrain the shell 211, reducing the risk of fatigue cracking of the shell 211.

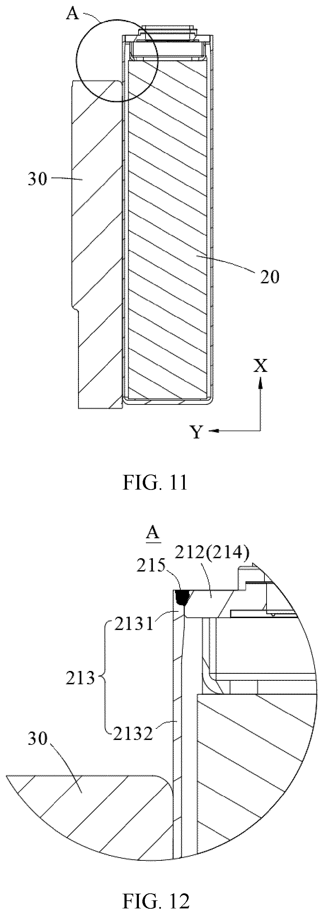

Referring to FIG. 11 and FIG. 12, FIG. 11 is a schematic assembly diagram of an end plate 30 and a battery cell according to an embodiment of this application, and FIG. 12 is a partial enlarged view of position A of FIG. 11. According to some embodiments of this application, the end plate 30 is arranged facing the first wall 213.

In the foregoing solution, the end plate 30 is arranged facing the first wall 213, and the end plate 30 has a relatively large contact area with the second zone 2132, such that the end plate 30 can constrain the first wall 213 during the charge and discharge cycling of the battery cell 20, so as to reduce the risk of fatigue cracking of the first wall 213.

According to some embodiments of this application, an embodiment of this application provides an electric device, where the electric device includes the battery cell 20 or the battery 100 according to any one of the foregoing embodiments.

The electric device may be any one of the systems or devices mentioned above that use the battery cell 20 or the battery 100, and the battery cell 20 or the battery 100 is configured to supply electric energy.

According to some embodiments of this application, an embodiment of this application provides an energy storage apparatus, where the energy storage apparatus includes the battery cell 20 or the battery 100 according to any one of the foregoing embodiments.

According to some embodiments of this application, referring to FIG. 4 to FIG. 9, an embodiment of this application provides a battery cell 20, where the battery cell 20 is in a rectangular parallelepiped shape. The battery cell 20 includes a housing 21, an electrode assembly, and an electrode terminal. The electrode assembly is arranged in the housing 21; the housing 21 includes a shell 211 and an end cover 212; the electrode terminal 21a is arranged on the end cover 212; and the electrode terminal 21a is connected to a tab of the electrode assembly 22 through an adapter 23. The shell 211 includes two first side walls 211a arranged opposite each other along a second direction Y, two second side walls 211b arranged opposite each other along a third direction Z, and a bottom wall 211c. The two first side walls 211a and two second side walls 211b enclose a cavity with an opening, the end cover 212 closes the opening, and the end cover 212 is arranged opposite the bottom wall 211c. The housing 21 includes a first wall 213 and a second wall 214, where the first wall 213 is the first side wall 211a and the second wall 214 is the end cover 212. The first wall 213 and the second wall 214 are welded to form a first welding zone 215, the first wall 213 includes a first zone 2131 and a second zone 2132 arranged along a first direction X, the first zone 2131 is arranged adjacent to the first welding zone 215, a thickness of the first zone 2131 is greater than a thickness of the second zone 2132, and the first direction X is parallel to a thickness direction of the second wall 214.

In the battery cell 20 according to this embodiment of this application, the first zone 2131 of the first side wall 211a close to the first welding zone 215 is thickened, such that the first zone 2131 has relatively high strength, thereby reducing the risk of fatigue cracking of the first side wall 211a, and allowing the battery cell 20 to have relatively high reliability.

Although this application has been described with reference to some preferred embodiments, various modifications to this application and replacement of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A battery cell, comprising:
a housing, comprising a first wall and a second wall, wherein the first wall and the second wall are welded to form a first welding zone, the first wall comprises a first zone and a second zone arranged along a first direction, the first zone is arranged adjacent to the first welding zone, a thickness of the first zone is greater than a thickness of the second zone, and the first direction is parallel to a thickness direction of the second wall.

2. The battery cell according to claim **1,** wherein along the first direction, a size of the first zone is **H,** satisfying 0<H≤5 mm.

3. The battery cell according to claim 1 or 2, wherein the thickness of the first zone is t, and the thickness of the second zone is a, satisfying a<t≤4a.

4. The battery cell according to claim 3, wherein a+0.1 mm≤t≤3a.

5. The battery cell according to any one of claims 1 to 4, wherein one of the following conditions is satisfied:
along the thickness direction of the first wall, the second zone has a first surface facing the inside of the battery cell, and part of the first zone protrudes from the first surface;
along the thickness direction of the first wall, the second zone has a second surface facing away from the inside of the battery cell, and part of the first zone protrudes from the second surface; and
along the thickness direction of the first wall, the second zone has a first surface facing the inside of the battery cell and a second surface facing away from the inside of the battery cell, part of the first zone protrudes from the first surface, and part of the first zone protrudes from the second surface.

6. The battery cell according to any one of claims 1 to 5, wherein the first zone comprises a thickened section and a transition section arranged along the first direction, wherein the thickened section is connected to the second zone through the transition section, a thickness of the thickened section is greater than a thickness of the second zone, and the thickness of the transition section gradually decreases from the thickened section to the second zone.

7. The battery cell according to any one of claims 1 to 6, wherein the first wall further comprises a third zone, wherein the third zone, the first zone, and the second zone are sequentially distributed along the first direction, the second wall and the third zone are connected to form the first welding zone, and a maximum thickness of the third zone is less than a maximum thickness of the first zone.

8. The battery cell according to any one of claims 1 to 7, wherein the housing comprises a shell and an end cover, wherein the shell has an opening, the end cover closes the opening, one of the first wall and the second wall is the end cover, and the other is at least one wall of the shell.

9. The battery cell according to claim 8, wherein the shell comprises two first side walls arranged opposite each other in a second direction and two second side walls arranged opposite each other in a third direction, wherein the second direction, the third direction, and the first direction are perpendicular to each other, the two first side walls and the two second side walls enclose a cavity with an opening, and the end cover closes the opening; and
the second wall is the end cover and the first wall is the first side wall.

10. The battery cell according to claim 9, wherein the second side walls and the end cover are welded to form a second welding zone, wherein the second side wall comprises a third zone and a fourth zone arranged along the first direction, the third zone is adjacent to the second welding zone, and a maximum thickness of the third zone is greater than a maximum thickness of the fourth zone.

11. The battery cell according to claim 9 or 10, wherein the shell further comprises a bottom wall, wherein the two first side walls and the two second side walls are arranged around the bottom wall, the two first side walls and the two second side walls are all connected to the bottom wall, the two first side walls and the two second side walls are integrally formed with the bottom wall, and the end cover is arranged opposite the bottom wall.

12. The battery cell according to any one of claims 9 to 11, wherein the shell further comprises a bottom wall, wherein the two first side walls and the two second side walls are arranged around the bottom wall, the two first side walls and the two second side walls are all connected to the bottom wall, the end cover is arranged opposite the bottom wall, and an area of an outer surface of the first side wall is greater than an area of an outer surface of the second side wall and greater than an area of an outer surface of the bottom wall.

13. The battery cell according to any one of claims 9 to 12, wherein the opening is provided on each of two ends of the shell, and the end cover is provided in a quantity of two, each end cover closing the corresponding opening.

14. The battery cell according to any one of claims 9 to 13, wherein a maximum thickness of the first wall is less than a maximum thickness of the second wall.

15. A battery, comprising the battery cell according to any one of claims 1 to 14.

16. The battery according to claim 15, wherein the housing comprises a shell and an end cover, wherein the shell has an opening, the end cover closes the opening, the second wall is the end cover, and the first wall is a wall of the shell; the battery cell is provided in plurality, and the plurality of battery cells are stacked along a second direction, the second direction being perpendicular to the first direction; and the battery further comprises an end plate, wherein along the second direction, the end plate is provided at an end of the plurality of battery cells, and along a direction in which the second zone points toward the first zone, at least part of the first zone extends beyond the end plate.

17. The battery according to claim 16, wherein the end plate is arranged facing the first wall.

18. An electric device, comprising the battery cell according to any one of claims 1 to 14 or the battery according to any one of claims 15 to 17, wherein the battery cell or the battery is configured to supply electric energy.

19. An energy storage apparatus, comprising the battery cell according to any one of claims 1 to 14 or the battery according to any one of claims 15 to 17.
